# EUROPEAN PATENT APPLICATION

(11) **EP 4 435 132 A1**
(43) Date of publication of application: **25.09.2024**
(21) Application number: 23163524.4
(22) Date of filing: 22.03.2023
(51) Int. Cl.: C22C 38/12, C22C 38/04, C22C 38/02, C21D 9/46, C21D 8/02, C21D 6/02, C21D 6/00, C21D 1/18, C21D 7/02, B32B 15/01

(54) **STEEL ALLOY, ARTICLE OF MANUFACTURE AND METHOD**

(71) Applicant: Hilti Aktiengesellschaft, 9494 Schaan (LI)
(72) Inventor: Bischof, Michael, 6900 Bregenz (AT); Elhami, Nahid Nora, 81245 München (DE); Tomandl, Alexander, 6800 Feldkirch (AT)
(74) Representative: Hilti Aktiengesellschaft Corporate Intellectual Property

(57) **Abstract**

Disclosed are a steel alloy, an article of manufacture made of the steel alloy, and a method of making an article of manufacture.

## Description

### TECHNICAL FIELD

Described herein are steel alloys and articles of manufacture made thereof. Also described herein are methods of making an article of manufacture.

### BACKGROUND ART

In many applications, there is the need to join elements. One such application is joining two elements by driving a fastening element into one or both of the elements, thereby using a fastening tool. The fastening tool is pressed against one of the elements, hereinafter referred to as a workpiece, then a driving mechanism is triggered which may drive a driving element onto the fastening element to drive the fastening element into the workpiece. One possible material of such a fastening element is high-strength steel containing carbon to some extent.

One constraint with steel, particularly if used for fastening elements, relates to sudden fracture due to embrittlement occurring over time. Embrittlement may be caused by diffusible hydrogen present in the steel. Efforts have been made to reduce the embrittlement of steel by trapping diffusible hydrogen. Hydrogen trapping is the effect of reversible or irreversible bonding of diffusible hydrogen to microstructural features of the steel, be it voids, grain boundaries, dislocations or precipitates. For example, certain chemical elements and compounds have been added to steel in order to trap hydrogen. However, in steels with high carbon contents to obtain high hardness, such additions may greatly deteriorate the hardness due to the formation of carbides after the hardening process.

Offering an alternative design that addresses some or all of the above constraints or at least offers the public a choice may be useful.

### SUMMARY

Throughout this specification, any indication of a percentage ("%") is to be understood as the fraction of the respective alloying constituent relative to a weight or mass of the overall steel alloy (weight percent).

According to one aspect, the above constraints are addressed by a steel alloy consisting essentially of
0.65 - 0.9 % carbon,
0.1 - 0.5 % vanadium and/or 0.01 - 0.1 % niobium,
0.5 - 1.2 % manganese,
0.1 - 0.6 % silicon,
0 - 0.5 % molybdenum,
0 - 0.5 % chromium,
0 - 1 % nickel,
0 - 0.4 % copper,
0 - 0.05 % aluminum,
the balance being iron and impurities, and incidental amounts of residual elements that do not adversely affect the basic and novel properties provided by the alloy.

Carbon is included to increase strength and hardness, but also for governing the desired microstructure of the steel. Moreover, carbon increases the hardenability, avoiding the formation of pro-eutectoid ferrite upon cooling. While most of the carbon will be incorporated in the steel matrix, a significant fraction will be used in the formation of vanadium- and/or niobium-rich alloy carbides. A too low carbon content will lead to insufficient strength and heat treatment response, while too high carbon content will impair cold-formability and may lead to undesirable levels of retained austenite. In a preferred embodiment, the steel alloy contains 0.75 - 0.85 % carbon. In another preferred embodiment, the steel is hardened to and comprises a Rockwell hardness of more than 57 HRC, in particular more than 59 HRC. Vanadium is a strong carbide former. Vanadium carbides may be dissolved during typical hot-rolling temperatures (> 1050°C), bringing both vanadium and carbon into a solid solution. A precipitation of finely dispersed vanadium carbide may be obtained after final processing. The vanadium content needs to be well-balanced, since too low content will not lead to the desired beneficial effects while too high content, except from being expensive, will lead to reduced processability. In a preferred embodiment, the steel alloy contains 0.2 - 0.3 % vanadium.

Like vanadium, niobium is a strong carbide forming element. In small amounts, it will not form individual carbide phases but may be incorporated into a mixed V(Nb)C compound. Additions of niobium may increase the temperature stability of the carbide phase, enabling stability of a small phase fraction even at high rolling temperatures of approx. 1200°C. This leads to significant grain refinement and an overall improvement of the mechanical properties. Too high amounts may lead to the formation of large pre-eutectoid carbides with negative impact on toughness and ductility. In a preferred embodiment, the steel alloy contains 0.01 - 0.05 % niobium.

In another preferred embodiment, the steel alloy contains both vanadium and niobium in the proposed amounts.

Manganese increases solid solution strength as well as hardenability and reduces the risk of hot cracking (uncritical MnS may be formed rather than harmful FeS). Too high amounts, however, will impair cold-formability and may lead to undesired levels of retained austenite. In a preferred embodiment, the steel alloy contains 0.7 - 1.0 % manganese.

Silicon leads to strong solid solution-strengthening, which may lead to limited cold-formability when added to amounts higher than proposed. In a preferred embodiment, the steel alloy contains 0.15 - 0.4 % silicon.

Molybdenum is a strong carbide former and increases the hardenability of the steel. Additions of small amounts may lead to a preferential formation of a bainite, both in continuous cooling or isothermal thermal processing. A too large amount will, however, lead to the formation of concurrent carbide phases (M₂C type), limiting the beneficial effect of MC type carbides in present steel. In a preferred embodiment, the steel alloy contains 0 - 0.3 % molybdenum.

Chromium is a strong carbide-forming element and strongly increases hardenability. If added in large amounts, however, cold formability as well as toughness and ductility after final processing may be impaired. Processing times required for heat treatment steps may also be prolonged. In a preferred embodiment, the steel alloy contains 0 - 0.3 % chromium.

Nickel may increase hardenability and toughness but may increase the processing times needed for heat treatment. Larger amounts, esp. when exceeding 1%, may lead to an undesirably high fraction of retained austenite. In a preferred embodiment, the steel alloy contains 0 - 0.2 % nickel.

Copper increases solid solution strength but leads to hot shortness when added in larger than the proposed amounts. Moreover, cold formability may be reduced. In a preferred embodiment, the steel alloy contains 0 - 0.2 % copper.

Aluminum is used as a strong deoxidant and leads to the formation of aluminum nitride, thereby increasing toughness and cold formability. However, its content needs to be limited to the proposed amount to avoid undesired amount of non-metallic inclusions.

Other elements are considered impurities and may prevail in a typical range for quenched and tempered quality steel grades.

The proposed composition of the steel alloy allows for a good homogenization of the material at typical hot-rolling temperatures of 1150°C and above and may avoid the formation of primary carbides from the melt. Such carbides should be avoided since they reduce the ductility of the material as well as the super-saturation of the steel matrix and therefore the potential for forming a high number of small vanadium-rich carbides at lower temperatures. These carbides are known to have a beneficial effect on the material's resistance against hydrogen induced cracking, since they serve as hydrogen traps. Niobium may be added to extend the thermodynamic stability of the formed carbides to higher temperatures, e.g. during thermal processing.

Preferably, the steel contains carbide particles, such as vanadium carbide particles and/or niobium carbide particles, each having a particle size, wherein the particle size of at least 50 %, preferably of at least 80 % of the carbide particles is smaller than 100 nm. The ability to trap hydrogen is greater at the surface of a carbide particle, a high overall surface of all carbide particles is beneficial to the steel's resistance against hydrogen induced cracking. In an even more preferred embodiment, the particle size of at least 50 %, preferably of at least 80 % of the carbide particles is smaller than 80 nm. In other preferred embodiments, the particle size of at least 50 %, or at least 80 % of the carbide particles is greater than 30 nm, or greater than 40 nm.

In a generally preferred embodiment, an article of manufacture, such as a fastening element, is made from the steel alloy as proposed.

According to another aspect, a method of making an article of manufacture comprises providing a semi-finished product comprising a steel alloy consisting essentially of
0.65 - 0.9 % carbon,
0.1 - 0.5 % vanadium and/or 0.01 - 0.1 % niobium,
0.5 - 1.2 % manganese,
0.1 - 0.6 % silicon,
0 - 0.5 % molybdenum,
0 - 0.5 % chromium,
0 - 1 % nickel,
0 - 0.4 % copper,
0 - 0.05 % aluminum,

the balance being iron and impurities, and incidental amounts of residual elements;
in a first heat treatment, heat treating the article of manufacture at 550°C - 725°C for at least 4 hours, or at least 8 hours, immediately followed by slow cooling;
forming the semi-finished product to provide the article of manufacture;
in a second heat treatment following the first heat treatment, heat treating the article of manufacture at 730°C - 1150°C, immediately followed by rapid cooling.

The first heat treatment may serve to form a high number of fine V(Nb)C particles in the size range of approx. 100 nm. Such particles are small enough to ensure a large trapping effect by providing a large interfacial surface area between carbides and the steel matrix but are also large enough to effectively prevent austenite grain growth. A large fraction of these V(Nb)C particles will be located inside the grains of the ferritic matrix rather than on grain boundaries, keeping hydrogen away from the grain boundaries. Moreover, these particles seem to be large enough to surprisingly not dissolve or coarsen significantly during the second heat treatment despite the higher temperature of the second heat treatment as compared to the first heat temperature. The first heat treatment step may also lead to the formation of globular cementite (iron carbide, Fe3C) out of lamellar pearlite, which prevails after hot-rolling, to ensure good cold-formability of the material. In a preferred embodiment, the first heat treatment comprises heat treating the article of manufacture at 700°C - 720°C.

In a preferred embodiment, forming the semi-finished product to provide the article of manufacture preferably includes, or consists of, cold-forming, or preferably rolling, the semi-finished product. In another preferred embodiment, forming the semi-finished product to provide the article of manufacture is performed after the first heat treatment.

The second heat treatment may be an austenitizing treatment such as e.g. a quench-and-temper process or an isothermal hardening process, resulting in good mechanical properties of the finished article of manufacture, particularly a high tensile strength of e.g. more than 2000 MPa. In preferred embodiment, the steel is hardened to a Rockwell hardness of more than 57 HRC, in particular more than 59 HRC, during the second heat treatment. To this end, the second heat treatment is preferably performed after the first heat treatment and after forming the semi-finished product to provide the article of manufacture. The subsequent rapid cooling may be performed in an agitated gas flow, oil bath, salt bath or fluidized bed to possibly generate a microstructure consisting of martensite, bainite or mixtures thereof. In a preferred embodiment, the second heat treatment comprises heat treating the article of manufacture at 780°C - 950°C.

Samples produced by the material and heat treatment method described above showed a very good resistance against hydrogen-induced cracking. Tests have been performed in rigs simulating the atmospheric corrosion of zinc-coated components under harsh environmental conditions. The corrosion of zinc-coated components even in small surface areas is known to produce sufficiently high levels of hydrogen to cause high-strength steel components to fracture. The tested components had an ultimate tensile strength (UTS) of 2300 MPa and were pre-stressed to their elastic limit. Within a given test duration, the fracture rate (fraction of fractured samples / initial number of installed samples) was less than half of the fracture rate of standard components (without V and Nb) having an UTS of only 2100 MPa.

### BRIEF DESCRIPTION OF THE DRAWINGS

Further aspects and advantages of the steel alloy, article of manufacture and method of making thereof will become apparent from the ensuing description that is given by way of example only and with reference to the accompanying drawings in which:
- Fig. 1: shows a fastening element according to the invention in a side view,
- Fig. 2: shows the fastening element in an oblique view, and
- Fig. 3: shows a rolling die for producing the fastening element.

### DETAILED DESCRIPTION

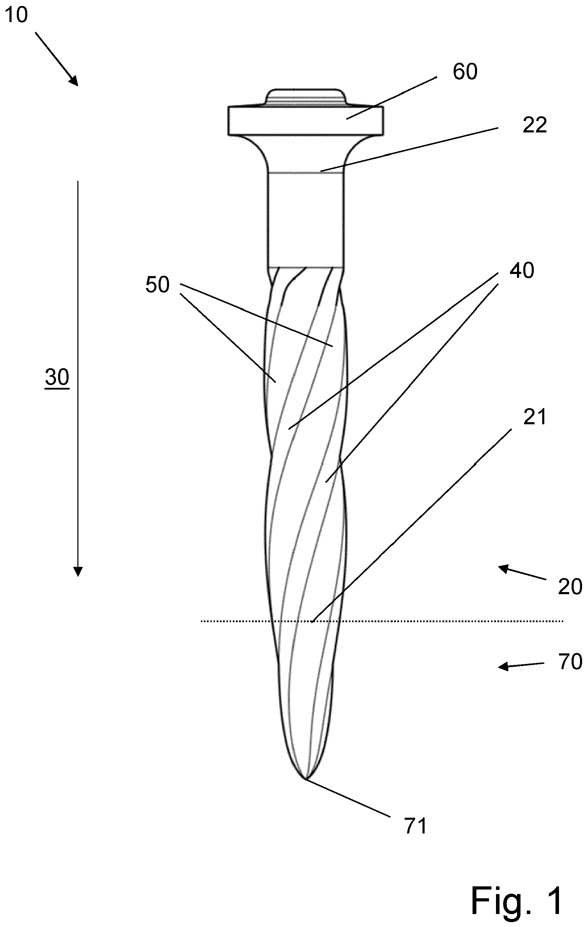

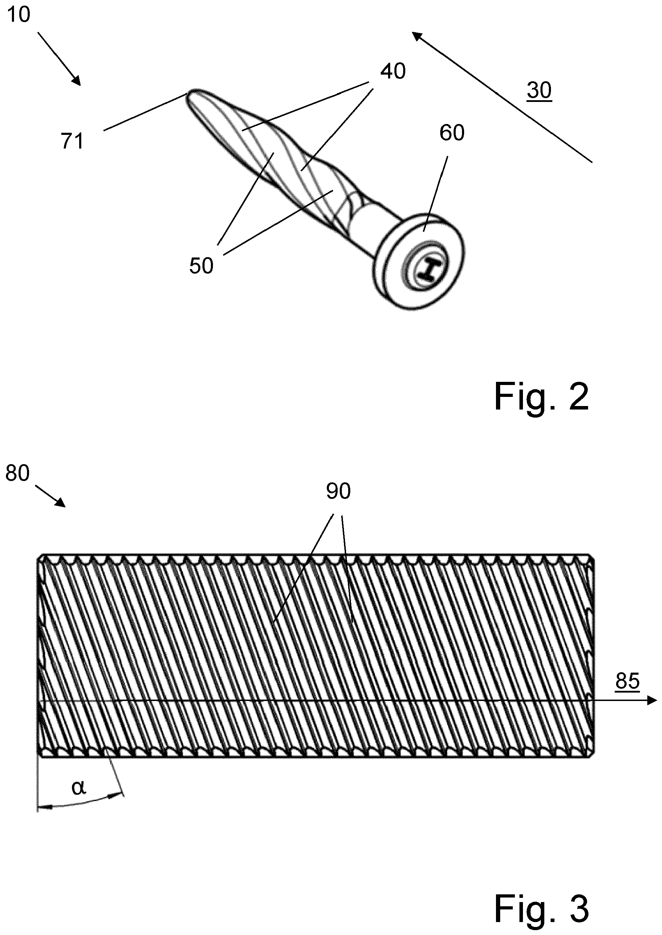

Figs. 1 and 2 show an article of manufacture, or fastening element 10, in a side view. The fastening element 10 comprises a shank 20, which defines a driving-in direction 30, and a front end 21, facing in the driving-in direction 30, and also a rear end 22, facing counter to the driving-in direction 30. The shank 20 has a cross-sectional area oriented perpendicularly to the driving-in direction 30 and at its periphery a number of profile ridges 40 and grooves 50 inclined in relation to the driving-in direction. The rear end 22 of the shank 20 is adjoined by a head 60. The front end 21 of the shank 20 is adjoined by a convex tip region 70 with a preferably pointed nail tip 71. In a preferred embodiment, the fastening element 10 is a nail particularly configured to be driven into hard materials, such as steel or concrete. In non-shown embodiments, the fastening element is configured to be driven into softer materials, such as wood, or may have a thread to be screwed into a workpiece.

The article of manufacture is made from a steel alloy consisting essentially of
0.75 - 0.85 % carbon,
0.2 - 0.3 % vanadium,
0.01 - 0.05 % niobium,
0.7 -1.0 % manganese,
0.15 - 0.4 % silicon,
0 - 0.3 % molybdenum,
0 - 0.3 % chromium,
0 - 0.2 % nickel,
0 - 0.2 % copper,
0 - 0.05 % aluminum,
the balance being iron and impurities, and incidental amounts of residual elements.

Fig. 3 shows a rolling die 80, which may be provided for a method of making an article of manufacture, such as e.g. the fastening element 10 as shown in Figs. 1-2. A semi-finished product, such as a blank, having a shank that is not shown is rolled, or cold-rolled, between the rolling die 80 and a similarly shaped mating die in a rolling direction 85. The rolling die 80 has a multiplicity of channels 90, and so during rolling, a profile with profile ridges is rolled into a periphery of the shank. The channels 90 are inclined with respect to a longitudinal direction of the shank which is oriented perpendicularly to the rolling direction 85, by an acute angle of inclination α, and so the rolled profile ridges are also inclined with respect to the longitudinal direction of the shank by the angle α.

Before rolling, the article of manufacture is heat treated at 710°C for 10 hours, immediately followed by a slow cooling step. After rolling, the article of manufacture is heat treated at 860°C, immediately followed by a rapid cooling step. Then, a Rockwell hardness of the article of manufacture is 60 HRC. In other embodiments, the Rockwell hardness is even higher, e.g. 62 HRC or 65 HRC.

After the second heat treatment described above, the steel contains vanadium carbide particles, wherein a particle size of a majority of the carbide particles is greater than 40 nm and smaller than 80 nm, thus enhancing the ability to trap hydrogen which is greater at the surface of a carbide particle than within a bulk of the particle. The inventors are not aware of any successful previous application of hydrogen trapping concepts to steel components of the same strength level nor to materials having a carbon content above 0.65 %. This is particularly the case for components produced from steel wire by cold forming.

The foregoing exemplary embodiments of the invention have been presented for purposes of illustration and of description. It is not intended to be exhaustive or to limit the invention to the precise form disclosed, and modifications and variations are possible in light of the above teachings or may be acquired from practice of the invention. The functionality described may be distributed among modules that differ in number and distribution of functionality from those described herein. Additionally, the order of execution of the functions may be changed depending on the embodiment. The embodiments were chosen and described in order to explain the principles of the invention and as practical applications of the invention to enable one skilled in the art to utilize the invention in various embodiments and with various modifications as suited to the particular use contemplated. It is intended that the scope of the invention be defined by the claims appended hereto and their equivalents.

## Claims

1. A steel alloy consisting essentially of
- 0.65 - 0.9 % carbon,
- 0.1 - 0.5 % vanadium and/or 0.01 - 0.1 % niobium,
- 0.5 - 1.2 % manganese,
- 0.1 - 0.6 % silicon,
- 0 - 0.5 % molybdenum,
- 0 - 0.5 % chromium,
- 0 -1 % nickel,
- 0 - 0.4 % copper,
- 0 - 0.05 % aluminum,
the balance being iron and impurities, and incidental amounts of residual elements.

2. The steel alloy according to claim 1, containing 0.75 - 0.85 % carbon.

3. The steel alloy according to any of the preceding claims, containing 0.2 - 0.3 % vanadium.

4. The steel alloy according to any of the preceding claims, containing 0.01 - 0.05 % niobium.

5. The steel alloy according to any of the preceding claims, containing 0.7 - 1.0 % manganese.

6. The steel alloy according to any of the preceding claims, containing 0.15 - 0.4 % silicon.

7. The steel alloy according to any of the preceding claims, containing carbide particles each having a particle size, wherein the particle size of at least 50 %, or at least 80 % of the carbide particles is smaller than 100 nm.

8. The steel alloy according to claim 7, wherein the particle size of at least 50 %, or at least 80 % of the carbide particles is greater than 30 nm.

9. The steel alloy according to any of claims 7 and 8, wherein the particle size of at least 50 %, or at least 80 % of the carbide particles is greater than 40 nm and/or smaller than 80 nm.

10. The steel alloy according to any of claims 7 to 9, wherein the carbide particles are vanadium carbide particles and/or niobium carbide particles.

11. An article of manufacture made from a steel alloy according to any of the preceding claims.

12. The article of manufacture according to claim 11, wherein the article is a fastening element.

13. A method of making an article of manufacture, comprising
- providing a semi-finished product comprising a steel alloy consisting essentially of
- 0.65 - 0.9 % carbon,
- 0.1 - 0.5 % vanadium and/or 0.01 - 0.1 % niobium,
- 0.5 - 1.2 % manganese,
- 0.1 - 0.6 % silicon,
- 0 - 0.5 % molybdenum,
- 0 - 0.5 % chromium,
- 0 -1 % nickel,
- 0 - 0.4 % copper,
- 0 - 0.05 % aluminum,
- the balance being iron and impurities, and incidental amounts of residual elements,
- in a first heat treatment, heat treating the semi-finished product or the article of manufacture at 550°C - 725°C for at least 4 hours, or at least 8 hours, immediately followed by slow cooling,
- forming, or cold-forming the semi-finished product to provide the article of manufacture,
- in a second heat treatment following the first heat treatment, heat treating the article of manufacture at 730°C - 1150°C, immediately followed by rapid cooling.

14. The method according to claim 13, wherein the first heat treatment comprises heat treating the article of manufacture at 700°C - 720°C.

15. The method according to any of claims 13 and 14, wherein the second heat treatment comprises heat treating the article of manufacture at 780°C - 950°C.
